# FASCICULE DE BREVET EUROPEEN

(11) **EP 3 064 640 B1**
(45) Date de publication et mention de la délivrance du brevet: **19.07.2017**
(21) Numéro de dépôt: 16158092.3
(22) Date de dépôt: 01.03.2016
(51) Int. Cl.: D06F 75/10, D06F 75/14

(54) **APPAREIL ELECTROMENAGER DE REPASSAGE COMPORTANT UN RESERVOIR COMPRENANT UN AGENT ANTITARTRE ET UN CIRCUIT DE DISTRIBUTION DE VAPEUR COMPORTANT UN FILTRE**
ELEKTROHAUSHALTSGERÄT ZUM BÜGELN, DAS EINEN BEHÄLTER UMFASST, DER EINEN WASSERENTHÄRTER UND EINEN DAMPFVERTEILUNGSKREISLAUF MIT EINEM FILTER UMFASST
IRONING ELECTRICAL APPLIANCE COMPRISING A TANK INCLUDING A SCALE PREVENTIVE AGENT AND A STEAM DISTRIBUTION CIRCUIT COMPRISING A FILTER

(30) Priorité: 03.03.2015 FR 1551788
(43) Date de publication de la demande: 07.09.2016
(73) Titulaire: SEB S.A., 69130 Ecully (FR)
(72) Inventeur: COLLET, Frédéric, 38200 Vienne (FR)
(74) Mandataire: Bourrières, Patrice

(56) Documents cités:
- EP-A1- 2 584 089
- DE-A1- 3 729 800
- FR-A1- 2 979 924
- US-B2- 6 427 366

## Description

La présente invention concerne un appareil de repassage comportant un générateur de vapeur alimenté par un réservoir d'eau distinct du générateur de vapeur et se rapporte plus particulièrement à un appareil comprenant un dispositif pour la diffusion d'un agent anti-tartre dans l'eau envoyée vers le générateur de vapeur, l'appareil comprenant un circuit de distribution de vapeur comprenant au moins un filtre destiné à retenir des particules de tartre transportées par le flux de vapeur.

Il est connu, de la demande de brevet US 6 427 366, un fer à repasser comprenant un générateur de vapeur de type à vaporisation instantanée alimenté par un réservoir d'eau distinct du générateur de vapeur, le réservoir d'eau comprenant un agent antitartre. Dans ce document, la vapeur produite par le générateur de vapeur est distribuée vers des trous de sortie de vapeur par un circuit comprenant une grille filtrant les particules de tartre transportées par le flux de vapeur à la sortie de la chambre de vaporisation.

Un tel fer à repasser présente l'avantage de posséder un agent antitartre qui permet, dans une large mesure, de transformer le tartre produit par l'évaporation de l'eau dans la chambre de vaporisation en fine poudre pouvant être évacuée avec la vapeur diffusée au travers des trous de sortie de vapeur et de posséder, en complément, un filtre qui retient les plus grosses particules de tartre, évitant que ces dernières ne soient émises par les trous de sortie de vapeur de la semelle et ne viennent tacher le linge.

Cependant, un tel fer à repasser présente l'inconvénient d'avoir des performances, et notamment un débit de vapeur à la sortie de la semelle, pouvant diminuer dans le temps du fait du colmatage progressif du filtre et de l'entartrage de la chambre de vaporisation. Ce colmatage est d'autant plus rapide que le degré de filtration est important, c'est-à-dire que le filtre permet la rétention des particules de tartre les plus petites. EP 2 584 089 décrit un appareil ayant un filtre, qui n'est pas amovible. Aussi un but de la présente invention est de proposer un appareil de repassage remédiant à ces inconvénients.

A cet effet, l'invention se rapporte à un appareil de repassage comportant un générateur de vapeur, un réservoir, distinct du générateur de vapeur, alimentant en eau le générateur de vapeur, et un circuit de distribution de la vapeur issue du générateur de vapeur comprenant au moins un filtre destiné à retenir des particules de tartre transportées par le flux de vapeur, l'appareil comprenant un dispositif pour la diffusion d'un agent antitartre dans l'eau provenant du réservoir, avant son transfert dans le générateur de vapeur, caractérisé en ce que ledit filtre est amovible de l'appareil pour son nettoyage.

L'appareil ainsi réalisé présente l'avantage de posséder un filtre qui peut être extrait facilement de l'appareil pour son inspection et son éventuel nettoyage afin d'éviter une dégradation des performances de l'appareil de repassage.

Par filtre "amovible", on entend un filtre qui peut être extrait de l'appareil sans nécessiter un démontage de l'appareil au moyen d'un outil.

Par l'expression "tartre", on entend définir des dépôts à base essentiellement de carbonate de calcium CaCO₃ et/ou carbonate de magnésium MgCO₃, qui forment des accumulations solides de nature à diminuer les performances et la durée de vie de l'appareil.

Par "agent antitartre", on entend un agent permettant de supprimer ou au moins de réduire le dépôt de tartre dans la chambre de vaporisation. En particulier, sont compris comme des "agents antitartres", les agents inhibiteurs qui préviennent de la germination et/ou de la croissance du tartre dans le générateur de vapeur, en évitant notamment l'adhérence du tartre aux parois du générateur de vapeur, tels les cristaux de phosphonate, ou les agents curatifs qui permettent de dissoudre le tartre, tel l'acide citrique.

Selon une autre caractéristique de l'invention, le filtre est fixé sur un élément support monté de manière amovible dans le circuit de distribution, des moyens d'étanchéité étant disposés à l'interface entre l'élément support et le circuit de distribution.

Une telle caractéristique permet d'éviter le passage du flux de vapeur entre l'élément support et le conduit de manière à ce que le flux de vapeur passe majoritairement au travers du filtre.

Selon une autre caractéristique de l'invention, l'appareil comporte un orifice d'évacuation du tartre qui communique avec une partie du circuit de distribution située en amont du filtre.

Un tel orifice d'évacuation du tartre permet l'évacuation des particules de tartre présentes dans le circuit de distribution de vapeur et qui sont retenues en amont du filtre.

Selon une autre caractéristique de l'invention, le filtre est amovible de l'appareil par l'orifice d'évacuation du tartre.

Une telle caractéristique permet d'avoir un seul orifice permettant à la fois d'évacuer les particules de tartre et d'extraire le filtre de l'appareil pour son inspection.

Selon une autre caractéristique de l'invention, l'orifice d'évacuation du tartre est fermé par un bouchon amovible accessible depuis l'extérieur de l'appareil.

Selon une autre caractéristique de l'invention, le filtre est solidaire du bouchon.

Une telle caractéristique permet d'avoir un filtre qui est extrait automatiquement de l'appareil lors du retrait du bouchon, permettant une inspection systématique de l'état du filtre par l'utilisateur lorsqu'une opération d'évacuation du tartre est effectuée.

Une telle caractéristique permet également de réduire le nombre de manipulations que doit effectuer l'utilisateur pour accéder au filtre et d'éviter ainsi que l'utilisateur oublie de remettre le filtre après son nettoyage.

Selon une autre caractéristique de l'invention, le filtre comporte un récipient récupérateur de tartre s'introduisant par l'orifice d'évacuation du tartre dans une cavité de récupération du tartre ménagée en amont du filtre.

Une telle caractéristique présente l'avantage de permettre l'évacuation du tartre en retirant simplement le récipient récupérateur de tartre.

Selon une autre caractéristique de l'invention, le filtre est constitué par une grille avec des ouvertures inférieures à 0,6 mm de côté, et avantageusement inférieures à 0,4 mm, la grille présentant avantageusement une surface supérieure à 5 cm² et préférentiellement supérieure à 8 cm².

La taille réduite des ouvertures permet de ne laisser passer que des particules de tartre peu ou pas visibles à l'oeil nu vers les trous de sortie de vapeur. La surface importante du filtre permet, quant à elle, d'offrir une section de passage cumulée à travers les porosités du filtre suffisamment importante pour conserver un débit de vapeur acceptable malgré un colmatage partiel du filtre. De plus, une telle surface de filtration permet d'obtenir des pertes de charges compatibles avec la diffusion d'un flux de vapeur avantageusement supérieur à 20 gr/min, et préférentiellement supérieur à 30 gr/min, avec un générateur de vapeur constitué par une chambre de vaporisation instantanée alimentée classiquement par un boisseau à goutte.

Selon une autre caractéristique de l'invention, le filtre est disposé en aval d'une zone du circuit de distribution de vapeur où le flux de vapeur effectue un changement brutal de direction, de préférence d'au moins 90°.

Une telle caractéristique présente l'avantage de limiter la vitesse d'encrassement du filtre, les particules les plus lourdes étant entrainées, de part leur inertie, en dehors du filtre, dans une zone de stockage.

Selon encore une autre caractéristique de l'invention, les trous de sortie de vapeur sont ménagés dans une semelle de repassage d'un fer à repasser.

Selon encore une autre caractéristique de l'invention, le flux de vapeur cheminant dans le circuit de distribution de vapeur s'écoule de bas en haut au travers du filtre lorsque le fer à repasser repose horizontalement sur sa semelle.

Une telle caractéristique présente l'avantage de bloquer les particules contre la face inférieure du filtre de sorte que ces particules se détachent par gravité du filtre lors de l'arrêt du flux de vapeur.

Selon une autre caractéristique de l'invention, le fer à repasser comporte un talon sur lequel il peut reposer lors des phases inactives de repassage.

Selon une autre caractéristique de l'invention, le générateur de vapeur est une chambre de vaporisation instantanée.

Une telle caractéristique présente l'avantage d'offrir une construction simple pour produire de la vapeur.

Selon une autre caractéristique de l'invention, l'agent anti-tartre est un composé de phosphonate, ou un polyphosphate tel que l'hexamétaphosphate de sodium ou un agent antitartre biodégradable tel que décrit dans la demande de brevet déposée en France par la demanderesse sous le numéro de demande FR1453381.

Selon une autre caractéristique de l'invention, le dispositif pour la diffusion de l'agent antitartre est placé dans le réservoir d'eau.

Une telle caractéristique permet de diffuser l'agent antitartre directement dans la zone de stockage de l'eau, où cette dernière à tendance à stagner, ce qui permet d'avoir une meilleure diffusion des agents antitartre à diffusion lente.

Selon une autre caractéristique de l'invention, le filtre présente une forme bombée.

Une telle caractéristique présente l'avantage d'engendrer un glissement des gouttelettes d'eau le long de la forme bombée du filtre, cet écoulement des gouttelettes d'eau présentant l'avantage d'emporter une partie des particules de tartre accrochées au filtre, participant ainsi à son nettoyage.

Selon une autre caractéristique de l'invention, le récipient récupérateur de tartre présente une extrémité avant ouverte par laquelle pénètre le flux de vapeur et une extrémité postérieure fermée, le récipient comportant une fenêtre latérale par laquelle le flux de vapeur s'échappe en direction des trous de sortie de vapeur, le filtre s'étendant au travers de la fenêtre.

Une telle caractéristique permet de bénéficier de l'effet d'entrainement du flux de vapeur traversant le récipient pour augmenter la quantité de tartre récupérée dans le récipient, les particules étant piégées à l'intérieur du récipient récupérateur de tartre par le filtre.

Selon une autre caractéristique de l'invention, le récipient récupérateur de tartre comporte au moins une partie, s'étendant derrière le filtre, définissant un volume de stockage.

Une telle caractéristique présente l'avantage de permettre le stockage des particules de tartre dans une zone se trouvant à l'écart du filtre lorsque l'appareil est disposé de telle sorte que le récipient est orienté sensiblement verticalement avec l'extrémité postérieure fermée vers le bas.

De manière avantageuse, le volume de stockage du récipient récupérateur de tartre est supérieur à 4 cm³.

Une telle caractéristique permet de recueillir les particules de tartre accumulées entre deux entretiens, ainsi que l'eau non vaporisée dans la chambre de vaporisation, sans venir souiller le filtre.

Selon une autre caractéristique de l'invention, le récipient récupérateur de tartre comporte, sur la paroi opposée à la fenêtre, une cuillère comprenant une partie creuse.

Selon une autre caractéristique de l'invention, la chambre de vaporisation instantanée est reliée à la cavité de récupération du tartre par une ouverture ménagée au niveau de l'extrémité arrière de la chambre de vaporisation, le flux de vapeur produit par la chambre de vaporisation s'échappant au travers du circuit de distribution de vapeur par l'ouverture ménagée à l'arrière de la chambre de vaporisation.

Selon une autre caractéristique de l'invention, l'orifice d'évacuation du tartre débouche au niveau du talon du fer à repasser.

Une telle caractéristique présente l'avantage d'offrir un excellent accès à l'orifice d'évacuation du tartre lorsque le fer à repasser repose sur sa semelle.

Selon une autre caractéristique de l'invention, la cavité de récupération du tartre se trouve en porte à faux derrière la semelle lorsque le fer à repasser repose sur sa semelle.

Une telle caractéristique permet d'éloigner la cavité de récupération du tartre de la semelle et donc de limiter le risque de brulure lors de la manipulation du bouchon.

Selon une autre caractéristique de l'invention, le dispositif pour la diffusion de l'agent antitartre pourra être amovible de l'appareil, en présentant par exemple la forme d'une cassette.

Une telle caractéristique permet d'échanger facilement le dispositif contre un neuf lors de l'épuisement de l'agent antitartre.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue en perspective d'un fer à repasser selon un mode particulier de réalisation de l'invention ;
- la figure 2 est une vue en coupe longitudinal du corps chauffant et de la semelle équipant le fer à repasser de la figure 1 ;
- la figure 3 est une vue en perspective du corps chauffant de la figure 2 démuni de son couvercle de fermeture ;
- la figure 4 est une vue de dessus du corps chauffant de la figure 2 ;
- les figures 5 et 6 sont des vues en perspective, partiellement arrachée, du corps chauffant de la figure 2 respectivement avec et sans le récipient récupérateur de tartre ;
- la figure 7 est une vue en perspective du récipient récupérateur de tartre fixé sur le bouchon équipant le fer à repasser de la figure 1.

Seuls les éléments nécessaires à la compréhension de l'invention ont été représentés. Pour faciliter la lecture des dessins les mêmes éléments portent les mêmes références d'une figure à l'autre.

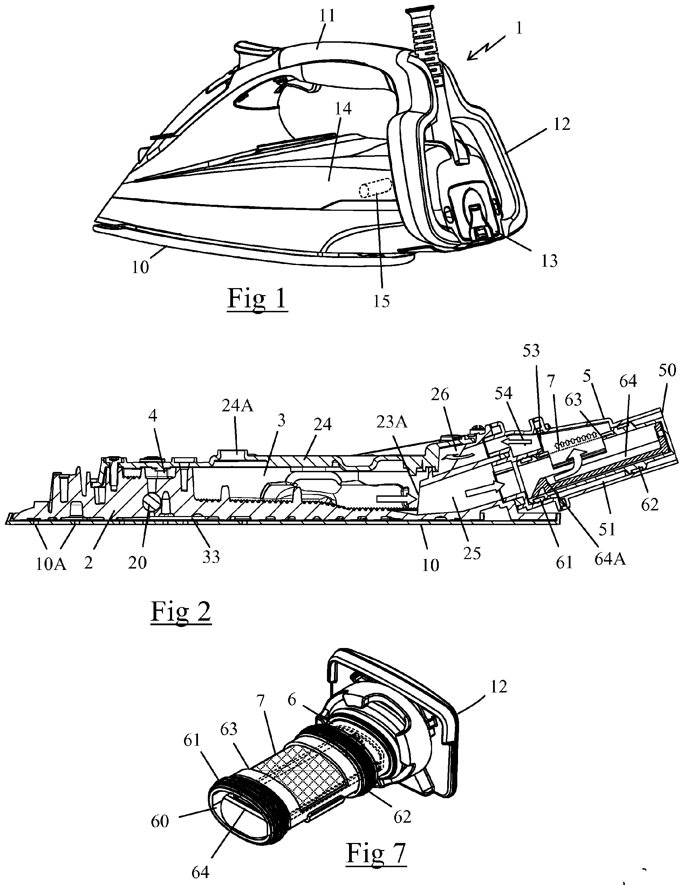

La figure 1 illustre un fer à repasser 1 à vapeur comportant une semelle 10 de repassage munie d'un ensemble de trous de sortie de vapeur 10A, visibles seulement sur la figure 2, la semelle 10 étant surmontée d'un boitier en matière plastique comprenant une poignée de préhension 11 à son extrémité supérieure et un talon 12 dans sa partie arrière sur lequel le fer à repasser peut reposer sensiblement verticalement lors des phases inactives de repassage.

Le talon 12 comporte deux bras délimitant entre eux un espace recevant un bouchon 13 amovible donnant accès à un orifice d'évacuation du tartre 50, visible sur la figure 2, le bouchon 13 étant fixé sur une surface postérieure du boitier par une fixation de type baïonnette semblable à celle décrite plus en détails dans la demande de brevet FR 2 981 371 déposée par la demanderesse, la surface postérieure du boitier étant légèrement inclinée vers l'avant pour offrir un accès plus aisé lorsque le fer à repasser repose horizontalement sur sa semelle 10.

Le boitier du fer à repasser 1 comporte, de manière connue en soi, un réservoir 14 d'eau, présentant des parois avantageusement transparentes, contenant de l'eau destinée à alimenter une chambre de vaporisation 3, visible sur la figure 2.

Le réservoir 14 d'eau comporte un dispositif 15 pour la diffusion d'un agent antitartre. Ce dispositif 15 peut, par exemple, permettre la diffusion progressive d'un agent préventif de la germination et/ou de la croissance du tartre dans la chambre de vaporisation.

A titre d'exemple préférentiel, le dispositif 15 assurera la diffusion de polyphosphate, un tel agent présentant l'avantage d'éviter au tartre d'adhérer sur les parois de la chambre de vaporisation 3 et permettant la libération du tartre sous la forme de particules de taille relativement importante, facilement filtrable.

Le dispositif 15 pourra également comprendre une structure microporeuse libérant de l'hexamétaphosphate de sodium, tel que cela est décrit dans le brevet FR 2 757 364, et/ou être constitué par un dispositif permettant la diffusion d'un composé phosphonate tel que cela est décrit dans le brevet EP 0 610997.

Le dispositif 15 pour la diffusion de l'agent antitartre pourra également permettre la diffusion d'un agent antitartre biodégradable, tel que cela est décrit dans la demande de brevet déposée par la demanderesse sous le numéro de demande FR 1 453 381, un tel agent antitartre présentant l'avantage de ne pas être polluant.

Bien entendu, le dispositif 15 pourra également combiner la diffusion de ces agents, une telle combinaison présentant l'avantage de permettre l'obtention de cinétiques de dissolution différentes des agents antitartre pour une efficacité optimale de l'action antitartre quelque soit l'intensité d'utilisation de l'appareil.

Ainsi, le dispositif 15 pourra permettre la diffusion d'un agent antitartre à diffusion lente, tel que polyphosphate, et un agent antitartre à diffusion rapide, tel que de l'hexamétaphosphate de sodium.

Le dispositif 15 pourra également permettre la diffusion d'un agent antitartre acide ayant une action curative sur le tartre, plutôt qu'une action préventive. A titre d'exemple, cet agent antitartre curatif pourra être composé d'un acide citrique ou sulfamique. Cet agent acide antitartre pourra se présenter sous la forme d'un liquide ou d'un gel distribué dans l'eau du réservoir 15 au moyen d'une pompe doseuse, ou au moyen d'une membrane poreuse délivrant l'agent par gravité ou par équilibre de pression osmotique. L'agent acide antitartre pourra également présenter la forme d'une pastille de sel d'acide déshydraté.

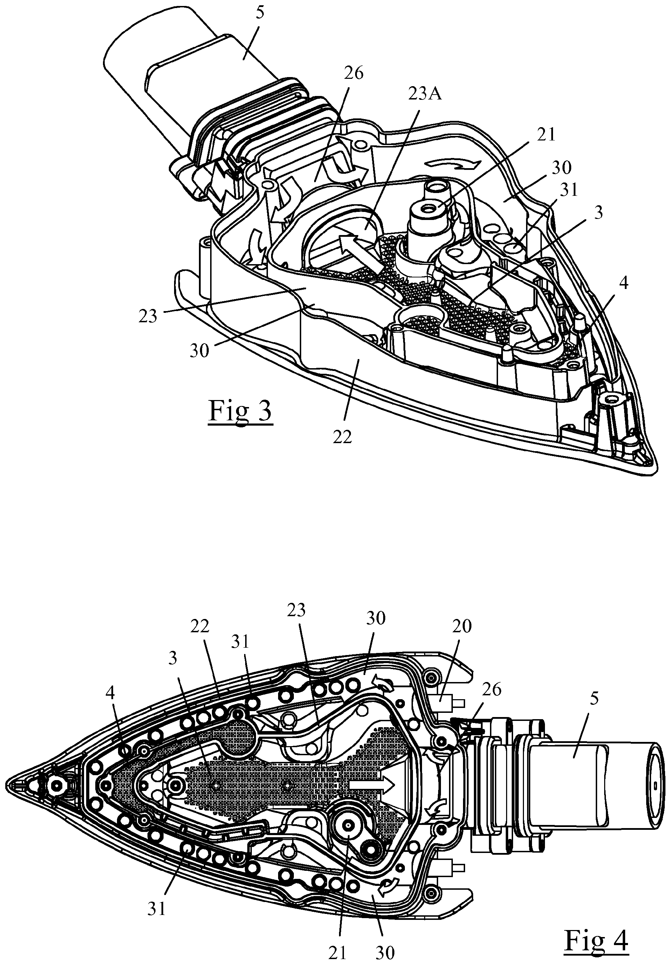

Conformément aux figures 2 à 4, la semelle 10 du fer à repasser est liée thermiquement et mécaniquement à un corps chauffant 2 intégré dans la partie basse du boitier, le corps chauffant 2 comportant une fonderie en aluminium comprenant classiquement un élément résistif 20 cintré en fer à cheval et un bossage 21, visible sur la figure 3, prévu pour recevoir un thermostat de régulation de la température de la semelle 10.

Le corps chauffant 2 comporte une paroi périphérique 22 qui délimite latéralement un espace comprenant une chambre de vaporisation 3 principale et une chambre de survapeur 4, de type à vaporisation instantanée, comportant un fond présentant une multitude de plots pyramidaux permettant d'augmenter la surface d'échange thermique.

La chambre de vaporisation 3 est disposée au centre du corps chauffant 2 et est reliée aux trous de sortie de vapeur de la semelle 10 par un circuit de distribution de vapeur comprenant deux canaux latéraux 30 s'étendant de part et d'autre de la chambre de vaporisation 3 et se rejoignant à l'extrémité avant et à l'extrémité arrière du corps chauffant 2. Les canaux latéraux 30 comportent classiquement des orifices 31 traversant le corps chauffant 2 pour déboucher sur la face inférieure du corps chauffant, au niveau de cavités de distribution de vapeur 33, visibles sur la figure 2, disposées en regard des trous de sortie de vapeur 10A de la semelle.

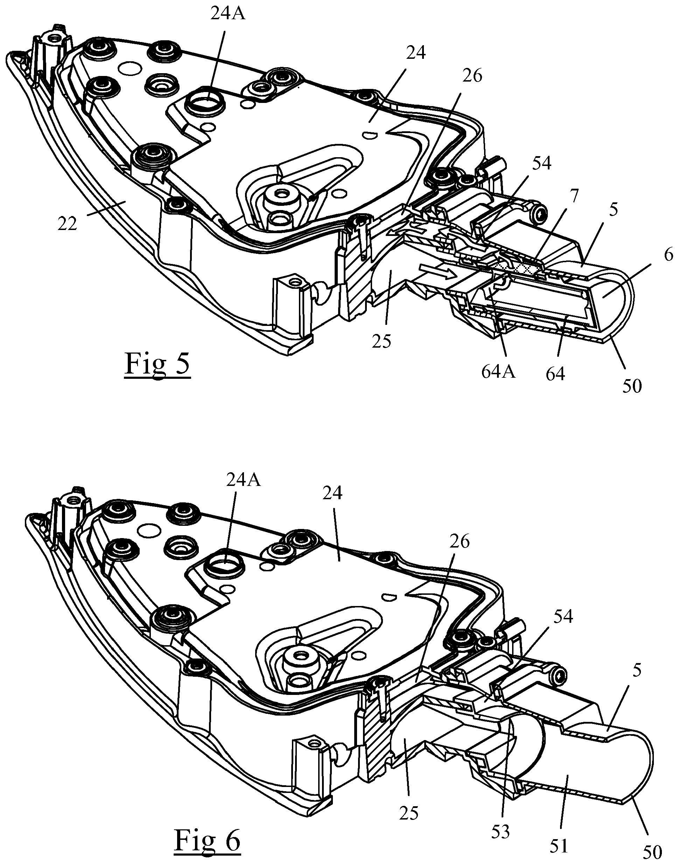

Conformément aux figures 2 et 5, le corps chauffant 2 comporte également une plaque de fermeture 24 qui vient reposer sur le bord supérieur de la paroi périphérique 22, cette plaque de fermeture 24 étant surmontée du réservoir 14 d'eau, visible sur la figure 1, alimentant en eau la chambre de vaporisation 3 par un orifice 24A de la plaque de fermeture 24 recevant, de manière connue en soi, un boisseau goutte-à-goutte, non représenté sur les figures, permettant la production d'un débit de vapeur en continu de l'ordre de 20 à 70 gr/min.

La chambre de vaporisation 3 principale est délimitée latéralement par une cloison 23 remontant jusqu'à la plaque de fermeture 24, en étant liée de manière étanche avec cette dernière, de sorte que la vapeur produite dans la chambre de vaporisation 3 ne peut s'échapper que par une ouverture 23A ménagée dans la cloison 23 au niveau de l'extrémité arrière de la chambre de vaporisation 3.

Comme on peut le voir sur la figure 2, l'ouverture 23A de la cloison débouche sur un conduit 25, de section transversale sensiblement oblongue, réalisé dans la fonderie du corps chauffant 2, ce conduit 25 s'étendant obliquement par rapport au plan de la semelle 10, en faisant un angle de l'ordre de 20°, et étant prolongé par un collecteur 5 en matière plastique, par exemple du type PPS (Polysulfure de phénylène), intégré dans le boitier du fer à repasser 1.

Le collecteur 5 comprend une cavité 51 de récupération du tartre s'étendant axialement dans le prolongement du conduit 25 et débouchant sur le talon 12 du fer à repasser au niveau de l'orifice d'évacuation du tartre 50 fermé par le bouchon 13, la cavité 51 se trouvant en porte à faux derrière la semelle 10 lorsque le fer à repasser repose sur sa semelle 10 et présentant une section transversale oblongue.

Comme on peut le voir sur les figures 2 et 6, le collecteur 5 comporte une ouverture d'échappement 53 dans la partie supérieure de la cavité 51 de récupération du tartre, cette ouverture d'échappement 53 débouchant dans un canal de retour 54 s'étendant au-dessus du conduit 25 et débouchant dans une chambre de répartition 26 disposée à l'entrée des deux canaux latéraux 30.

Conformément aux figures 5 et 7, la cavité 51 de récupération du tartre reçoit un récipient 6 récupérateur de tartre amovible présentant une forme complémentaire de la cavité 51 de récupération du tartre, le récipient 6 récupérateur de tartre pouvant être extrait ou introduit dans la cavité 51 par l'orifice d'évacuation du tartre 50. Le récipient 6 comporte une extrémité avant 60 ouverte par laquelle le flux de vapeur émis par la chambre de vaporisation 3 est admis dans le récipient 6 et une extrémité arrière fermée avantageusement fixée au bouchon 13, ainsi que cela est illustré sur la figure 7. Le récipient 6 comprend une partie inférieure munie d'une cuillère 64 de rétention du tartre comportant une partie creuse dans laquelle les particules de tartre sont stockées, l'extrémité avant de la cuillère présentant une marche 64A permettant d'éviter que le tartre récupéré dans la cuillère 64 ne retourne par gravité dans la chambre de vaporisation lorsque le fer à repasser 1 est disposé sur sa semelle 10.

Le récipient 6 est préférentiellement réalisé en matériau plastique, du type polyamide PA 6-6 renforcé de fibre de verre à 30%, et supporte un premier et un second joints 61, 62 en silicone venant au contact de la paroi intérieure de la cavité 51 de récupération du tartre, le récipient 6 comportant, entre les deux joints 61, 62, une ouverture ménagée dans la moitié supérieure du récipient 6 formant une fenêtre 63 latérale venant en regard de l'ouverture d'échappement 53 de la cavité 51 de récupération du tartre lorsque le récipient 6 est intégralement introduit dans la cavité 51.

Conformément à la figure 7, le récipient 6 récupérateur de tartre comporte un filtre 7 constitué par une grille de filtration bombée s'étendant au travers de la fenêtre 63, cette grille 7 de filtration étant fixée en bordure de la fenêtre et étant avantageusement recouverte d'un revêtement hydrophobe et/ou anti-adhérent tel que PTFE (polytétrafluoroéthylène). De manière préférentielle, le récipient 6 récupérateur de tartre est surmoulé en bordure de la grille 7 de filtration de manière à assurer une parfaite fixation de la grille 7 sur le récipient 6.

La grille 7 de filtration présente des ouvertures calibrées pour retenir les particules de tartre les plus grosses et possède une taille adaptée pour offrir une section de passage suffisante pour le débit de vapeur requis. A titre d'exemple, la grille 7 pourra comporter des ouvertures carrées de moins de 0.6 mm de côté, et préférentiellement comprises entre 0.1 mm et 0.4 mm, la surface de la grille étant au minimum de 8 cm² pour des ouvertures carrées de 0.2 mm et un débit de vapeur prévu de l'ordre de 40 à 50 gr/min. La grille 7 sera avantageusement réalisée en fil d'inox de l'ordre de 0,1 mm de diamètre ou d'un diamètre inférieur.

De manière préférentielle, la fenêtre 63 recevant la grille 7 est disposée en retrait par rapport à l'extrémité avant 60 ouverte de manière à ce que la grille 7 se trouve suffisamment éloignée de la chambre de vaporisation 3 pour que l'eau en ébullition dans la chambre de vaporisation 3 ne vienne pas, par projection, souiller la grille 7 de filtration. De plus, la disposition de la grille 7 en hauteur sur le récipient 6, lorsque le fer à repasser repose sur sa semelle 10, permet d'éviter son souillage par de l'eau pouvant parvenir dans la cavité 51 à la suite d'une vaporisation incomplète de l'eau injectée dans la chambre de vaporisation 3 lors d'une séance de repassage.

L'éloignement de la grille 7 de filtration par rapport à la chambre de vaporisation 3, ainsi que l'utilisation de matériaux plastiques pour le collecteur 5 et le récipient 6, présentent également l'avantage de permettre l'obtention d'une température relativement faible dans l'environnement de la grille 7, autour de 100°C, évitant ainsi une vaporisation forte de l'eau pouvant parvenir dans la zone du récipient 6 située sous la grille 7.

De manière préférentielle, la fenêtre 63 est également éloignée de l'extrémité arrière du récipient 6 de telle sorte qu'il résulte un volume de stockage de l'ordre de 4 à 5 cm³ dans la partie du récipient 6 située entre le fond du récipient 6 et la grille 7, dans lequel les particules de tartre tombent lorsque le fer à repasser 1 est placé verticalement sur son talon 12.

L'écoulement du flux de vapeur dans le fer à repasser 1 ainsi réalisé va maintenant être décrit.

Lorsque l'eau issue du boisseau goutte à goutte parvient au contact du fond de la chambre de vaporisation 3, elle se vaporise instantanément, ce qui provoque le dégagement d'un flux de vapeur, illustré par des flèches sur les figures 2 à 5, qui s'échappe par l'ouverture 23A de la cloison 23 puis s'écoule successivement, au travers du conduit 25 de sortie, du récipient 6, de la grille 7, du canal de retour 54 et des canaux latéraux 30, le flux de vapeur traversant ensuite les orifices 31 pour déboucher sur la face inférieure de la semelle 10 et s'échapper par les trous de sortie 10A de la semelle.

L'eau vaporisée étant chargée en agent antitartre, suite à son séjour dans le réservoir 14 équipé du dispositif 15, la vaporisation de l'eau s'accompagne essentiellement de la formation de particules de tartre de petite taille, inférieure à la taille des ouvertures de la grille 7, de sorte que ces particules sont transportées par la vapeur et diffusées progressivement par les trous de sortie de vapeur de la semelle 10, sans que cela ne soit perceptible par l'utilisateur.

Toutefois, l'évaporation de l'eau de la chambre de vaporisation 3, peut à terme, suite à l'épuisement de l'agent antitartre, ou du fait de son efficacité partielle, créer la formation d'une couche de carbonate de calcium dans le fond de la chambre de vaporisation 3 qui va se désagréger progressivement en particules de tartre de plus grande taille, sous l'effet notamment de la dilatation du corps chauffant 2 lors des phases de refroidissement entre deux séances de repassage.

Les plus grosses particules de tartre présentes dans la chambre de vaporisation 3 se trouvent emmenées progressivement par le flux de vapeur dans le conduit 25 et se trouvent pour partie envoyées, de part leur inertie, dans le fond du récipient 6 récupérateur de tartre où elles se trouvent piégées de sorte qu'elles tombent par gravité dans la cuillère 64 et pour partie envoyée vers la grille 7. Cette séparation inertielle des particules de tartre s'effectue notamment grâce au virage de l'ordre de 90° qu'effectue le flux de vapeur à l'entrée de la grille 7.

Le déplacement des plus grosses particules de tartre vers le récipient 6 s'effectue également par gravité à chaque fois que le fer à repasser 1 est placé sur son talon 12, le volume de stockage ménagé dans le fond du récipient 6 étant adapté pour recevoir les particules de tartre, accompagnées d'éventuelles gouttes d'eau, sans que ces dernières ne viennent au contact de la grille 7, évitant ainsi le souillage de la grille 7.

Lors de l'arrêt de la vapeur, la plupart des particules piégées par la grille 7 retombent par gravité dans la cuillère 64 du récipient 6, quelques particules pouvant toutefois rester collées sur la grille 7 et contribuer au colmatage progressif de cette dernière, la grille 7 s'entartrant également du fait de l'évaporation des éventuelles gouttelettes d'eau parvenant au contact de la grille 7.

Lorsqu'un nettoyage du fer à repasser 1 est nécessaire, c'est-à-dire après plusieurs séances de repassage à la vapeur, ou lorsqu'un témoin d'alerte est activé sur le fer à repasser, l'utilisateur peut aisément extraire la majeure partie du tartre présent dans le fer à repasser en plaçant le fer à repasser 1 horizontalement sur sa semelle 10, de manière à accéder facilement au bouchon 13, et en extrayant le récipient 6 récupérateur de la cavité 51 en déverrouillant le bouchon 13 et en le déplaçant vers l'arrière de manière à faire coulisser axialement le récipient 6 au travers de l'orifice d'évacuation du tartre 50.

Lors de cette extraction du récipient 6, le tartre est conservé dans la cuillère 64 grâce à la forme creuse de cette dernière et à la présence de la marche 64A à proximité de l'extrémité avant de la cuillère.

Le contenu du récipient 6 peut ensuite être vidé et le récipient 6 peut être passé sous l'eau du robinet pour son nettoyage. Lors de cette opération d'évacuation du tartre, l'utilisateur a un accès visuel direct sur l'état de la grille 7 de filtration de sorte qu'il se rend compte immédiatement de son état de propreté. S'il le juge nécessaire, il peut effectuer un nettoyage de la grille 7 en la frottant sous l'eau avec une brosse ou en la plongeant dans un liquide détartrant.

Le fer à repasser ainsi réalisé présente l'avantage d'éviter durablement tout rejet visible de particules de tartre sur le linge. En effet, la présence d'un agent antitartre dans l'eau du réservoir permet à la fois de retarder la formation des particules de tartre mais également de réduire la taille de ces particules de sorte que le fer à repasser pourra fonctionner durant une grande période sans nécessiter un nettoyage de la grille de filtration, la plupart des particules de tartre transportées par la vapeur présentant une taille inférieure aux ouvertures de la grille et seules les particules les plus grosses étant retenue en amont de la grille. Ainsi, une telle combinaison permet d'augmenter grandement l'intervalle de temps entre deux opérations de nettoyage de la grille de filtration.

De plus, le fer à repasser ainsi réalisé permet une évacuation aisée des particules de tartre récupérées à l'aide du récipient récupérateur de tartre de sorte qu'il peut être très facilement maintenu dans un état de propreté propice à un fonctionnement optimal du fer à repasser.

En particulier, le fer à repasser ainsi réalisé présente l'avantage de permettre à l'utilisateur d'avoir un contrôle visuel direct de l'état d'encrassement de la grille de filtration lors de l'extraction du récipient récolteur de tartre de sorte que l'utilisateur peut juger immédiatement, lorsqu'il effectue une telle opération, s'il est nécessaire de nettoyer la grille de filtration.

Bien entendu, l'invention n'est nullement limitée au mode de réalisation précédemment décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation non représentée, le dispositif pour la diffusion de l'agent antitartre pourra être disposé, non pas directement dans le réservoir d'eau, mais dans le circuit d'alimentation reliant le réservoir d'eau à la chambre de vaporisation, de préférence dans une zone tampon dédiée à cet effet.

Dans une autre variante de réalisation, le dispositif pour la diffusion de l'agent antitartre pourra également être disposé à l'entrée du réservoir de manière à ce que l'agent soit diffusé dans l'eau lors du remplissage du réservoir.

Dans une autre variante de réalisation, le dispositif pour la diffusion de l'agent antitartre pourra être disposé dans une zone du fer à repasser qui n'est alimentée en eau que pendant des phases spécifiques d'utilisation du fer à repasser, par exemple lorsque le fer à repasser est posé sur son talon ou à l'inverse est posé sur la semelle. Une telle variante présente l'avantage de préserver la durée de vie du dispositif en limitant seulement à certaines phases d'utilisation, la diffusion de l'agent antitartre.

Ainsi, dans une variante de réalisation de l'invention non représentée, le récipient récupérateur de tartre pourra ne pas être fixé sur le bouchon mais comporter, à son extrémité postérieure, une poignée lui permettant d'être saisi manuellement par l'utilisateur après le retrait du bouchon.

Ainsi, dans une autre variante de réalisation non représentée, le filtre pourra être amovible de l'appareil par une ouverture distincte de l'orifice d'évacuation du tartre, le filtre pouvant par exemple être extractible sur un côté de l'appareil.

Ainsi, dans une autre variante de réalisation non représentée, la grille de filtration pourra être montée de manière amovible sur le récipient récupérateur de tartre de sorte que la grille de filtration puisse être changée en cas de besoin.

Ainsi dans une variante de réalisation non représentée, le fer à repasser pourra comporter différents filtres successifs avec des mailles de filtration de plus en plus fines. Au moins une partie de ces filtres, et avantageusement les filtres avec les mailles le plus fines, sera disposée sur le récipient récupérateur de tartre afin de permettre un nettoyage aisé des filtres s'encrassant le plus rapidement. Toutefois, le fer à repasser pourra également comporter des filtres additionnels, non amovibles, à l'intérieur du fer à repasser, en aval des filtres amovibles.

Ainsi, dans une variante de réalisation non représentée, la chambre de vaporisation pourra être découplée thermiquement de la semelle, cette dernière pouvant comporter son propre élément chauffant.

## Revendications

1. Appareil de repassage comportant un générateur de vapeur (3), un réservoir (14), distinct du générateur de vapeur (3), alimentant en eau le générateur de vapeur (3), et un circuit de distribution de la vapeur issue du générateur de vapeur (3) comprenant au moins un filtre (7) destiné à retenir des particules de tartre transportées par le flux de vapeur, ledit appareil comprenant un dispositif (15) pour la diffusion d'un agent antitartre dans l'eau provenant du réservoir (14), avant son transfert dans le générateur de vapeur (3), **caractérisé en ce que** ledit filtre (7) est amovible de l'appareil pour son nettoyage.

2. Appareil de repassage (1) selon la revendication 1, **caractérisé en ce que** le filtre (7) est fixé sur un élément support (6) monté de manière amovible dans le circuit de distribution et **en ce que** des moyens d'étanchéité (61, 62) sont disposés à l'interstice entre l'élément support (6) et le circuit de distribution.

3. Appareil de repassage selon l'une quelconque des revendications 1 à 2, **caractérisé en ce qu'**il comporte un orifice d'évacuation du tartre (50) qui communique avec une partie du circuit de distribution située en amont du filtre (7).

4. Appareil de repassage (1) selon la revendication 3, **caractérisé en ce que** filtre (7) est amovible de l'appareil par l'orifice d'évacuation du tartre (50).

5. Appareil de repassage (1) selon l'une quelconque des revendications 3 à 4, **caractérisé en ce que** l'orifice d'évacuation du tartre (50) est fermé par un bouchon (13) amovible accessible depuis l'extérieur de l'appareil.

6. Appareil de repassage (1) selon la revendication 5, **caractérisé en ce que** le filtre (7) est solidaire du bouchon (13).

7. Appareil de repassage (1) selon l'une quelconque des revendications 5 à 6, **caractérisé en ce qu'**il comporte un récipient (6) récupérateur de tartre s'introduisant par l'orifice d'évacuation du tartre (50) dans une cavité (51) de récupération du tartre ménagée en amont du filtre (7).

8. Appareil de repassage selon l'une quelconque des revendications 1 à 7, **caractérisé en ce que** le filtre (7) est constitué par une grille comprenant des ouvertures inférieures à 0,6 mm de côté, ladite grille présentant avantageusement une surface supérieure à 5 cm².

9. Appareil de repassage (1) selon l'une quelconque des revendications 1 à 8, **caractérisé en ce que** le filtre (7) est disposé en aval d'une zone du circuit de distribution de vapeur où le flux de vapeur effectue un changement brutal de direction, de préférence d'au moins 90°.

10. Appareil de repassage selon l'une quelconque des revendications 1 à 9, **caractérisé en ce que** les trous de sortie de vapeur (10A) sont ménagés dans une semelle (10) de repassage d'un fer à repasser (1).

11. Appareil de repassage selon la revendication 10, **caractérisé en ce que** le flux de vapeur cheminant dans le circuit de distribution de vapeur s'écoule de bas en haut au travers du filtre (7) lorsque le fer à repasser (1) repose horizontalement sur sa semelle (10).

12. Appareil de repassage (1) selon l'une quelconque des revendications 1 à 11, **caractérisé en ce que** le générateur de vapeur est une chambre de vaporisation (3) instantanée.

13. Appareil de repassage (1) selon l'une quelconque des revendications 1 à 12, **caractérisé en ce que** ledit agent anti-tartre est un composé de phosphonate, ou un polyphosphate, tel que hexamétaphosphate de sodium, ou un agent antitartre biodégradable.

14. Appareil de repassage (1) selon l'une quelconque des revendications 1 à 13, **caractérisé en ce que** le dispositif (15) pour la diffusion de l'agent antitartre est placé dans le réservoir (14) d'eau

## Patentansprüche

1. Bügelgerät, das einen Dampferzeuger (3), einen Behälter (14), der von dem Dampferzeuger (3) getrennt ist und Wasser zu dem Dampferzeuger (3) einspeist, und eine Schaltung zur Verteilung von Dampf umfasst, das aus dem Dampferzeuger (3) stammt und mindestens einen Filter (7) umfasst, der dazu bestimmt ist, Kalkpartikel zurückzuhalten, die durch den Dampfstrom transportiert werden, wobei das Gerät eine Vorrichtung (15) für die Verteilung eines Antikalkmittels in dem Wasser, das aus dem Reservoir (14) stammt, vor seiner Übertragung in den Dampferzeuger (3) umfasst, **dadurch gekennzeichnet, dass** der Filter (7) aus der Vorrichtung für seine Reinigung herausnehmbar ist.

2. Bügelgerät (1) nach Anspruch 1, **dadurch gekennzeichnet, dass** der Filter (7) auf einem Trägerelement (6) befestigt ist, das herausnehmbar in der Schaltung zur Verteilung angebracht ist, und dass Dichtungsmittel (61,62) in dem Spalt zwischen dem Trägerelement (6) und der Schaltung zur Verteilung angeordnet sind.

3. Bügelgerät nach einem der Ansprüche 1 bis 2, **dadurch gekennzeichnet, dass** es eine Öffnung zur Ausleitung von Kalk (50) umfasst, die mit einem Abschnitt der Schaltung zur Verteilung in Verbindung steht, die sich stromaufwärts von dem Filter (7) befindet.

4. Bügelgerät (1) nach Anspruch 3, **dadurch gekennzeichnet, dass** der Filter (7) aus der Vorrichtung durch die Öffnung zur Ausleitung von Kalk (50) herausnehmbar ist.

5. Bügelgerät (1) nach einem der Ansprüche 3 bis 4, **dadurch gekennzeichnet, dass** die Öffnung zur Ausleitung von Kalk (50) durch einen herausnehmbaren Stopfen (13) verschlossen ist, der von außerhalb der Vorrichtung zugänglich ist.

6. Bügelgerät (1) nach Anspruch 5, **dadurch gekennzeichnet, dass** der Filter (7) einstückig mit dem Stopfen (13) ist.

7. Bügelgerät (1) nach einem der Ansprüche 5 bis 6, **dadurch gekennzeichnet, dass** es einen Behälter (6) zur Rückgewinnung von Kalk umfasst, der durch die Öffnung zur Ausleitung von Kalk (50) in einen Hohlraum (51) zur Rückgewinnung von Kalk, der stromaufwärts von dem Filter (7) ausgebildet ist, eingeführt wird.

8. Bügelgerät nach einem der Ansprüche 1 bis 7, **dadurch gekennzeichnet, dass** der Filter (7) durch ein Gitter gebildet ist, das Öffnungen von weniger als 0,6 mm seitwärts umfasst, wobei das Gitter vorzugsweise eine Oberfläche von mehr als 5 cm² aufweist.

9. Bügelgerät (1) nach einem der Ansprüche 1 bis 8, **dadurch gekennzeichnet, dass** der Filter (7) stromabwärts von einem Bereich der Schaltung zur Verteilung von Dampf angeordnet ist, wo der Dampfstrom eine abrupte Änderung der Richtung, von vorzugsweise mindestens 90° durchführt.

10. Bügelgerät nach einem der Ansprüche 1 bis 9, **dadurch gekennzeichnet, dass** die Löcher zum Austritt von Dampf (10A) in einer Bügelsohle (10) eines Bügeleisens (1) ausgebildet sind.

11. Bügelgerät nach Anspruch 10, **dadurch gekennzeichnet, dass** der Dampfstrom, der in dem Kanal zur Dampfverteilung vordringt, von unten nach oben durch den Filter (7) strömt, wenn das Bügeleisen (1) horizontal auf seiner Sohle (10) ruht.

12. Bügelgerät (1) nach einem der Ansprüche 1 bis 11, **dadurch gekennzeichnet, dass** der Dampferzeuger eine Kammer zur unmittelbaren Verdampfung (3) ist.

13. Bügelgerät (1) nach einem der Ansprüche 1 bis 12, **dadurch gekennzeichnet, dass** das Antikalkmittel eine Phosphonatverbindung oder ein Polyphosphat wie Natriumhexametaphosphat oder ein biologisch abbaubares Antikalkmittel ist.

14. Bügelgerät (1) nach einem der Ansprüche 1 bis 13, **dadurch gekennzeichnet, dass** die Vorrichtung (15) für die Verteilung des Antikalkmittels in dem Wassertank (14) platziert ist.

## Claims

1. Ironing appliance comprising a steam generator (3), a tank (14), separate from the steam generator (3), supplying the steam generator (3) with water, and a steam distribution circuit coming from the steam generator (3) comprising at least one filter (7) intended to hold scale particles transported by the steam flow, said appliance comprising a device (15) to distribute a scale preventive agent into the water coming from the tank (14), before its transfer into the steam generator (3), **characterised in that** said filter (7) is removable from the appliance to be cleaned.

2. Ironing appliance (1) according to claim 1, **characterised in that** the filter (7) is fixed onto a support element (6), assembled so that it can be removed in the distribution circuit, and **in that** the watertight means (61, 62) are positioned at the gap between the support element (6) and the distribution circuit.

3. Ironing appliance according to any one of the claims 1 to 2, **characterised in that** it comprises a scale release orifice (50) which communicates with a section of the distribution circuit located above the filter (7).

4. Ironing appliance (1) according to claim 3, **characterised in that** the filter (7) can be removed from the appliance through the scale release orifice (50).

5. Ironing appliance (1) according to any one of the claims 3 to 4, **characterised in that** the scale release orifice (50) is closed with a removable stopper (13), accessible from the outside of the appliance.

6. Ironing appliance (1) according to claim 5, **characterised in that** the filter (7) is interdependent of the stopper (13).

7. Ironing appliance (1) according to any one of the claims 5 to 6, **characterised in that** it comprises a scale recovery container (6) inserted through the scale release orifice (50) in a scale recovery hole (51) positioned above the filter (7).

8. Ironing appliance according to one of the claims 1 to 7, **characterised in that** the filter (7) is constituted on a grid comprising openings less than 0.6mm from the side, said grid favourably presenting an area of more than 5cm².

9. Ironing appliance (1) according to any one of the claims 1 to 8, **characterised in that** the filter (7) is positioned below an area of the steam distribution circuit where the steam flow makes a sudden change in direction, preferably at least 90°.

10. Ironing appliance according to any one of the claims 1 to 9, **characterised in that** the steam outlet holes (10A) are positioned in an ironing pad (10) of an iron (1).

11. Ironing appliance according to claim 10, **characterised in that** the steam flow travelling in the steam distribution circuit flows from the bottom to the top through the filter (7) when the iron (1) is placed horizontally on its pad (10).

12. Ironing appliance (1) according to any one of the claims 1 to 11, **characterised in that** the steam generator is an instantaneous steam chamber (3).

13. Ironing appliance (1) according to any one of the claims 1 to 12, **characterised in that** said scale preventive agent is a phosphonate or a polyphosphate compound, such as sodium hexametaphosphate, or a biodegradable scale preventive agent.

14. Ironing appliance (1) according to any one of the claims 1 to 13, **characterised in that** the device (15) for distributing the scale preventive agent is placed in the water tank (14).
